# EUROPEAN PATENT APPLICATION

(11) **EP 4 138 067 A1**
(43) Date of publication of application: **22.02.2023**
(21) Application number: 21791749.1
(22) Date of filing: 08.02.2021
(51) Int. Cl.: G09F 9/30

(54) **TERMINAL DEVICE AND FOLDING DISPLAY SCREEN THEREOF**

(30) Priority: 20.04.2020 CN 202010313763
(71) Applicant: GUANGDONG OPPO MOBILE TELECOMMUNICATIONS CORP., LTD., Dongguan, Guangdong 523860 (CN)
(72) Inventor: FAN, Zehua, Dongguan, Guangdong 523860 (CN)
(74) Representative: Thorniley, Peter
(86) International application number: PCT/CN2021/076046
(87) International publication number: WO 2021/212976

(57) **Abstract**

Provided are a terminal device and a foldable display screen thereof. The foldable display screen includes a flexible display panel (10) and an axis-variable foldable assembly (20) arranged on a back of the flexible display panel (10). The axis-variable foldable assembly (20) includes a shaft body (21) and magnetic coils (22) arranged at two ends of the shaft body (21). The shaft body (21) includes a flexible outer layer (211) connected to the flexible display panel (10) and a plurality of magnetic beads (212) wrapped by the flexible outer layer (211). The plurality of magnetic beads (212) wrapped by the flexible outer layer (211) are movable relative to each other in a folding motion of the axis-variable foldable assembly (20). Upon a change in a current supplied to the magnetic coils (22), the magnetic coils (22) can provide variable magnetic fields to adjust an arrangement of the plurality of magnetic beads (212) wrapped by the flexible outer layer (211).

## Description

### FIELD

The present disclosure relates to the field of terminal device technologies, and more particularly, to a terminal device and a foldable display screen thereof.

### BACKGROUND

For terminal devices such as mobile phones and tablet computers, display screens, as important components for providing display or interaction, play vital role in enhancing user experience. As a new development trend, a foldable display screen can not only improve convenience, but also provide an advantage of a large screen when unfold. Therefore, major manufacturers are competing to release foldable display screens.

Foldable display screens are categorized into two modes of inward folding and outward folding. The inward folding means that display surfaces of a foldable display screen are folded towards each other. In the inward folding mode, after the foldable display screen is folded, the display surfaces of the foldable display screen are stacked on top of each other and face towards each other. The outward folding means that the display surfaces of the foldable display screen are folded away from each other. In the outward folding mode, after the foldable display screen is folded, the display surfaces of the foldable display screen face away from each other.

Due to a certain thickness of the foldable display screen, regardless of a foldable display screen having an inward-folding structure or a foldable display screen having an outward-folding structure, two opposite sides of the foldable display screen are subjected to tensile or compressive stresses in the process of folding, which can easily lead to a formation of creases on a surface of the foldable display screen. The creases will become more obvious as an increase in the folding times, seriously affecting the service life of the foldable display screen and a sense of wholeness of a picture displayed on the foldable display screen.

### SUMMARY

Based on this, it is necessary to provide a mobile terminal and a host end thereof.

In an aspect, the present disclosure provides a foldable display screen. The foldable display screen includes a flexible display panel having a display surface, and an axis-variable foldable assembly arranged on a side of the flexible display panel facing away from the display surface. The axis-variable foldable assembly includes a shaft body, and magnetic coils arranged at two ends of the shaft body. The shaft body includes a flexible outer layer connected to the flexible display panel, and a plurality of magnetic beads wrapped by the flexible outer layer. The plurality of magnetic beads wrapped by the flexible outer layer are movable relative to each other in a folding motion of the axis-variable foldable assembly. Upon a change in a current supplied to the magnetic coils, the magnetic coils are configured to generate variable magnetic fields to adjust an arrangement of the plurality of magnetic beads wrapped by the flexible outer layer.

In another aspect, the present disclosure provides a foldable display screen. The foldable display screen includes: a flexible display panel having a display surface; and an axis-variable foldable assembly arranged on a side of the flexible display panel facing away from the display surface. The axis-variable foldable assembly has a folding axis. The flexible display panel can perform a folding motion around the folding axis. In the folding motion of the flexible display panel, a position of the folding axis in the axis-variable foldable assembly varies.

In yet another aspect, the present disclosure provides a mobile terminal. The mobile terminal includes the foldable display screen as described above.

### BRIEF DESCRIPTION OF THE DRAWINGS

In order to clearly explain technical solutions of embodiments of the present disclosure, drawings used in description of embodiments are briefly described below. The drawings as described below are merely some embodiments of the present disclosure. Based on these drawings, other drawings can be obtained by those skilled in the art without creative effort.
FIG. 1 is a schematic structural diagram of a foldable display screen according to an embodiment of the present disclosure.
FIG. 2 is a schematic cross-sectional view, taken along line I-I in FIG. 1, of a foldable display screen according to an embodiment of the present disclosure.
FIG. 3 is a schematic diagram of a foldable display screen according to an embodiment of the present disclosure, in which a flexible display panel is folded and rotated along an axis-variable foldable assembly.
FIG. 4 is another schematic diagram of a foldable display screen according to an embodiment of the present disclosure, in which a flexible display panel is folded and rotated along an axis-variable foldable assembly.
FIG. 5 is a schematic diagram illustrating an arrangement of magnetic beads in a foldable display screen when a linear magnetic field is formed by supplying a current to a coil of an axis-variable foldable assembly according to an embodiment of the present disclosure.
FIG. 6 is a schematic diagram illustrating an arrangement of magnetic beads in a foldable display screen when a nonlinear magnetic field is formed by supplying a current to a coil of an axis-variable foldable assembly according to an embodiment of the present disclosure.
FIG. 7 is a schematic structural diagram of another implementation of an axis-variable foldable assembly in a foldable display screen according to an embodiment of the present disclosure.
FIG. 8 is a schematic diagram of a layer structure of a flexible display panel of a foldable display screen according to an embodiment of the present disclosure.
FIG. 9 is a schematic diagram of a layer structure of a flexible display panel of a foldable display screen according to another embodiment of the present disclosure.
FIG. 10 is a schematic structural diagram of a terminal device according to an embodiment of the present disclosure.

### DETAILED DESCRIPTION

In order to facilitate understanding of the present disclosure, the present disclosure will be described comprehensively below with reference to the accompanying drawings. The accompanying drawings illustrate preferred embodiments of the present disclosure. However, the present disclosure can be implemented in many different forms and is not limited to the embodiments described herein. On the contrary, the embodiments are provided to facilitate thorough and comprehensive understanding of the present disclosure.

A "terminal device" used herein includes, but is not limited to, a device configured to receive and/or transmit communication signals via any one or more of:
(1) a wired line connection, such as a Public Switched Telephone Network (PSTN), a Digital Subscriber Line (DSL), a digital cable, and a direct cable connection; and
(2) a wireless interface, such as a cellular network, a Wireless Local Area Network (WLAN), a digital television network such as a Digital Video Broadcasting-Handheld (DVB-H) network, a satellite network, and an Amplitude Modulation-Frequency Modulation (AM-FM) broadcast transmitter.

A terminal device configured to communicate through a wireless interface may be referred to as a "mobile terminal". Examples of the mobile terminal include, but are not limited to:
(1) a satellite phone or a cellular phone;
(2) a Personal Communications System (PCS) terminal, capable of combining with a cellular radiotelephone having data processing, facsimile, and data communication capabilities;
(3) a radiotelephone, a pager, an Internet/Intranet access, a Web browser, a notepad, a calendar, and a Personal Digital Assistant (PDA) equipped with a Global Positioning System (GPS) receiver;
(4) a conventional laptop and/or palmtop receiver; and
(5) a conventional laptop and/or palmtop radiotelephone transceiver, etc.

According to an embodiment of the present disclosure, the terminal device may be a folding mobile phone or a folding tablet computer. The terminal device includes a foldable display screen adapted to the folding use.

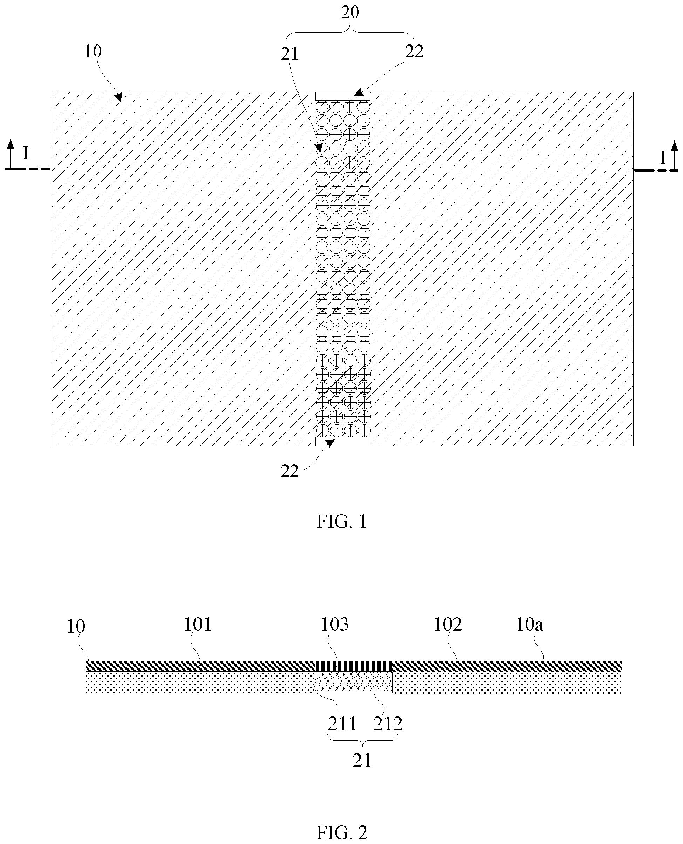

As illustrated in FIG. 1 and FIG. 2, the foldable display screen includes a flexible display panel 10 and an axis-variable foldable assembly 20. In order to facilitate understanding, during folding of the flexible display panel 10, an axis corresponding to a folding portion of the axis-variable foldable assembly 20 is referred to as a "folding axis". That is, the axis-variable foldable assembly 20 has a folding axis, around which the flexible display panel 10 performs a folding motion during the folding. As an example, an axis of a rotation shaft structure of a conventional foldable display screen is the "folding axis". It should be noted that, in the foldable display screen of the present disclosure, a position of the folding axis in the axis-variable foldable assembly 20 is adjustable. In an embodiment, for the axis-variable foldable assembly 20, the folding axis of the axis-variable foldable assembly 20 is not fixed. When the flexible display panel 10 performs the folding motion around the folding axis as a center of rotation, through varying the position of the folding axis, occurrences of creases, which may be easily formed due to the folding of the flexible display panel 10 around an axis at the same position, can be reduced as much as possible. Therefore, the service life of the flexible display panel 10 can be prolonged.

In an embodiment, the flexible display panel 10 has a display surface 10a. The display surface 10a refers to a side surface for emitting light and displaying image during the display of the flexible display panel 10.

The axis-variable foldable assembly 20 is arranged on a side of the flexible display panel 10 facing away from the display surface 10a. The axis-variable foldable assembly 20, as a rotating structure, can provide rotational support for the folding motion of the flexible display panel 10. In an embodiment, the folding axis of the axis-variable foldable assembly 20 serves as a rotation axis for the folding motion of the flexible display panel 10.

In some embodiments, as illustrated in FIG. 1, FIG. 2, and FIG. 5, the axis-variable foldable assembly 20 includes a shaft body 21 and magnetic coils 22 arranged at two ends of the shaft body 21. The shaft body 21 includes a flexible outer layer 211 connected to the flexible display panel 10, and a plurality of magnetic beads 212 wrapped by the flexible outer layer 211. The plurality of magnetic beads 212 moves under a magnetic field of the energized magnetic coils 22. Since the flexible outer layer 211 is flexible and deformable when being compressed, the flexible outer layer 211 does not restrict a movement of the magnetic beads 212, and thus the magnetic beads 212 can be arranged under the effect of the magnetic field of the magnetic coils 22. In an embodiment, upon a change in a current supplied to the magnetic coils 22, the magnetic field of the magnetic coils 22 may change. That is, the magnetic coils 22 can generate variable magnetic fields to adjust an arrangement of the plurality of magnetic beads 212. Therefore, during the folding motion of the axis-variable foldable assembly 20, bending positions may be different in different arrangements of the plurality of magnetic beads 212. That is, the folding position of the axis-variable foldable assembly 20 may vary to reduce a probability of crease formation resulted from repeatedly folding of the flexible display panel 10 at the same position.

As illustrated in FIG. 2, the flexible display panel 10 includes a first panel 101, a second panel 102, and a flexible connecting portion 103. The flexible connecting portion 103 is bendably connected between the first panel 101 and the second panel 102. Thus, the first panel 101 and the second panel 102 can fold and rotate with respect to each other. The flexible connecting portion 103 can meet a requirement of such bending.

In the present embodiment, the axis-variable foldable assembly 20 is connected to a side of the flexible connecting portion 103 facing away from the display surface 10a. In a folding motion of the flexible display panel 10, a portion of the axis-variable foldable assembly 20 corresponding to the folding axis can abut against the flexible connecting portion 103 to allow a folding motion of the flexible connecting portion 103 around the folding axis. Since the flexible connecting portion 103 between the first panel 101 and the second panel 102 can be bent during the folding motion of the flexible display panel 10, folding and unfolding of the first panel 101 and the second panel 102 can be satisfied.

The flexible connecting portion 103 serves as a bending position of the flexible display panel 10, and thus the flexible connecting portion 103 is the most vulnerable portion to crease formation of the flexible display panel 10. In the present embodiment, the portion of the axis-variable foldable assembly 20 corresponding to the folding axis can abut against the flexible connecting portion 103 to allow the folding motion of the flexible connecting portion 103 around the folding axis. In the axis-variable foldable assembly 20, through changing the current supplied to the magnetic coils 22, the magnetic field may be adjusted and thus the arrangement of the plurality of magnetic beads 212 may vary. Thus, a position where the axis-variable foldable assembly 20 folds easily can be changed, that is, the position of the folding axis can be adjusted. In this way, a folding position of the flexible connecting portion 103 can be changed by means of changing the current supplied to the magnetic coils 22, which reduces the folding of the flexible connecting portion 103 at the same position, thereby reducing a probability of crease formation.

In order to facilitate understanding, as an example, a non-fixed folding position of the flexible connecting portion 103 is described below, without limiting a use state of a flexible display screen of the present disclosure.

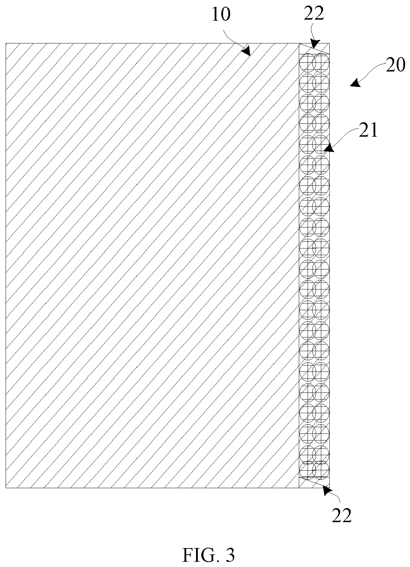

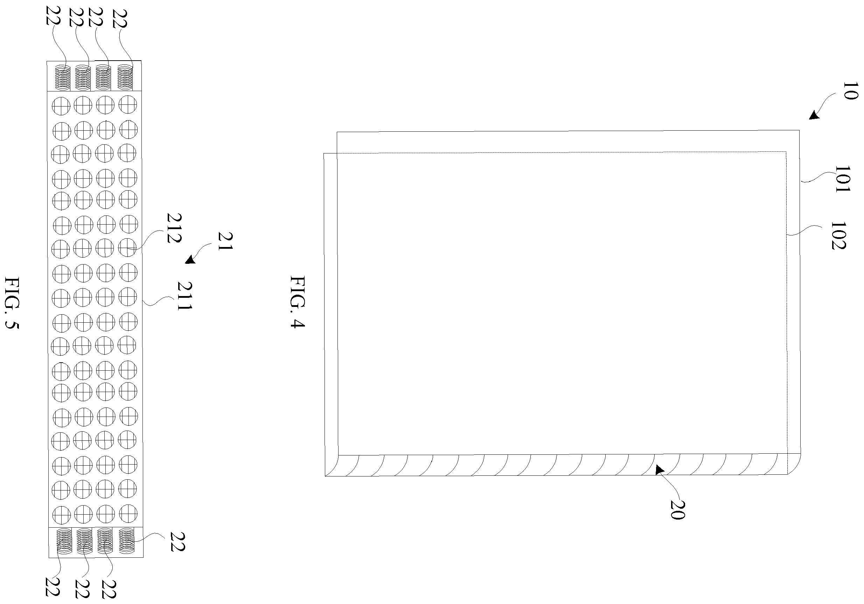

For example, as illustrated in FIG. 3, in an application scenario, after the flexible display panel 10 is folded along the folding axis of the axis-variable foldable assembly 20, the first panel 101 and the second panel 102 overlap each other. In combination with FIG. 4, after the flexible display panel 10 is folded along the folding axis, the first panel 101 and the second panel 102 may be staggered with respect to each other. That is, the folding position of the flexible display panel 10 is different from that illustrated in FIG. 3. Therefore, the probability of crease formation resulted from repeated folding at the same position can be reduced.

It should be noted that the arrangement of the plurality of magnetic beads 212 is influenced by the magnetic field of the magnetic coils 22. That is, when the magnetic field of the magnetic coils 22 changes, the plurality of magnetic beads 212 may be driven to move to present different arrangement.

For example, as illustrated in FIG. 5, the plurality of magnetic beads 212 may present a regular linear arrangement under a linear magnetic field. That is, the plurality of magnetic beads 212 is arranged in a plurality of layers, and the magnetic beads 212 in each layer are arranged in a straight line.

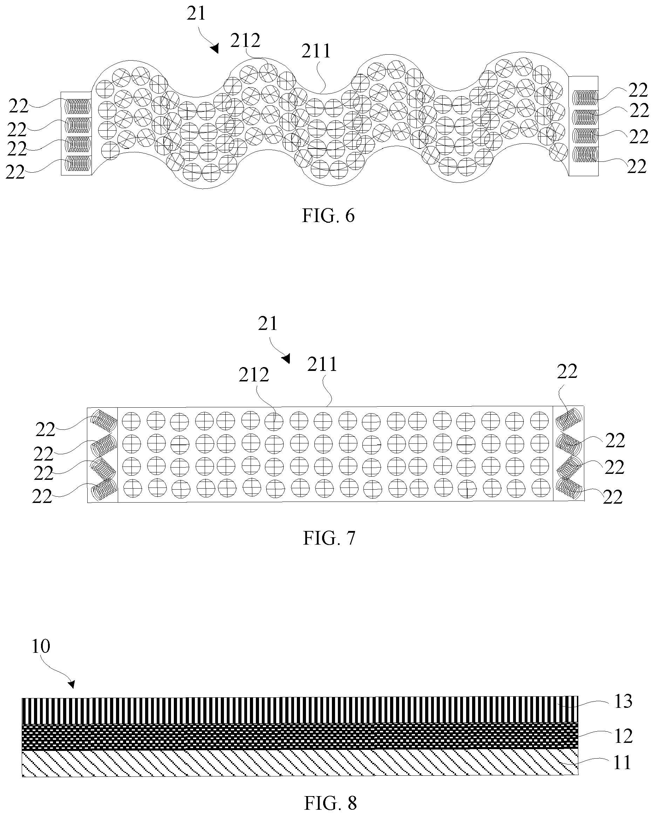

For example, as illustrated in FIG. 6, a non-linear magnetic field may be generated by the magnetic coils 22 by means of changing the current of the magnetic coils 22, and thus the magnetic beads 212 may present a non-linear arrangement under the non-linear magnetic field. Consequently, the magnetic beads 212 exert different degrees of compression on the flexible outer layer 211, causing the shaft body 21 to be twisted. In this case, when the axis-variable foldable assembly 20 is folded, due to the non-linear arrangement of the magnetic beads 212 inside the twisted shaft body 21, the folding motion does not occur at the same position. In this way, when the flexible display panel 10 performs the folding motion by taking the folding axis of the axis-variable foldable assembly 20 as the center of rotation, a folding position of the flexible display panel 10 is changeable. Therefore, the probability of crease formation resulted from repeated folding at the same position can be reduced.

When the current supplied to the magnetic coils 22 changes, the magnetic coils 22 can generate the variable magnetic fields to adjust the arrangement of the plurality of magnetic beads 212 wrapped by the flexible outer layer 211.

In some embodiments, when a direction of the current supplied to the magnetic coils 22 changes, the magnetic coils 22 can generate the variable magnetic fields to adjust the arrangement of the plurality of magnetic beads 212 wrapped by the flexible outer layer 211.

In some embodiments, when a magnitude of the current supplied to the magnetic coils 22 changes, the magnetic coils 22 can generate the variable magnetic field to adjust the arrangement of the plurality of magnetic beads 212 wrapped by the flexible outer layer 211.

Whether changing the direction of the current of the magnetic coils 22 or the magnitude of the current of the magnetic coils 22, the magnetic field of the magnetic coils 22 can be changed, and under the variable magnetic field, the magnetic beads 212 can present different arrangements. In this way, the axis-variable foldable assembly 20 can have a position-adjustable folding axis to reduce the probability of crease formation resulted from repeated folding and rotation of the flexible display panel 10 at the same position.

It should be noted that magnetic coils 22 may be arranged at the two ends of the shaft body in various arrangements. The magnetic field can be adjusted simply by changing the current of the magnetic coils 22, to arrange the magnetic beads 212 in different manners.

In some embodiments, at least two sets of magnetic coils 22 are correspondingly provided and evenly arranged at the two ends of the shaft body 21. In this way, by changing the current of the corresponding magnetic coils 22, the magnetic beads 212 located between the corresponding magnetic coils 22 can be arranged by following the magnetic field.

In other embodiments, at least two sets of magnetic coils 22 are correspondingly provided at the two ends of the shaft body 21. Magnetic fields generated by the at least two sets of magnetic coils 22 overlap each other. Under such overlapping magnetic fields, the magnetic beads 212 can be arranged in the space defined by the flexible outer layer 211 in a more random manner. In this way, the folding axis of the axis-variable foldable assembly 20 can change in a more flexible manner to reduce a probability of repeated folding of the flexible display panel 10 at the same position, thereby decreasing occurrences of creases.

As illustrated in FIG. 7, in some embodiments, the magnetic coils 22 located at the same end of the shaft body 21 are arranged in a wavy pattern. In an embodiment, for the magnetic coils 22 located at the same end of the shaft body, the adjacent magnetic coils 22 are arranged in a "V"-like shape. The arrangement of the magnetic coils 22 is not described in detail herein.

In some embodiments, the flexible outer layer 211 is filled with a lubricant to fill in gaps between the magnetic beads 212, thereby providing satisfying lubrication to facilitate motions of the magnetic beads 212 relative to each other. Therefore, the axis-variable foldable assembly 20 can be folded and rotated more smoothly.

The lubricant may be a solid lubricant such as magnesium stearate, starch, calcium stearate, aluminum stearate, or stearic acid. In other embodiments, the lubricant may be a solid lubricant such as simethicone, lecithin, vegetable oil, or mineral oil.

In some embodiments, the flexible outer layer 211 is made of one or more of polyether sulfone (PES), polyacrylate (PAR), polyetherimide (PEI), polyethylene naphthalate (PEN), polyethylene terephthalate (PET), polyphenylene sulfide (PPS), polyallylate, polyimide (PI), polycarbonate (PC), or cellulose acetate propionate (CAP). The flexible outer layer 211 made of any of the above materials has good flexibility or bendability, and thus the magnetic beads 212 are less restricted when moving relative to each other, thereby allowing the axis-variable foldable assembly 20 to be folded and rotated flexibly.

It should be noted that the flexible display panel 10 may have various structural form.

For example, FIG. 8 is a schematic diagram of a layer structure of the flexible display panel 10 according to an embodiment of the present disclosure. As illustrated in FIG. 8, the flexible display panel 10 includes a substrate 11, an organic light-emitting diode (OLED) layer 12, and a thin film encapsulation (TFE) layer 13 that are sequentially laminated on each other.

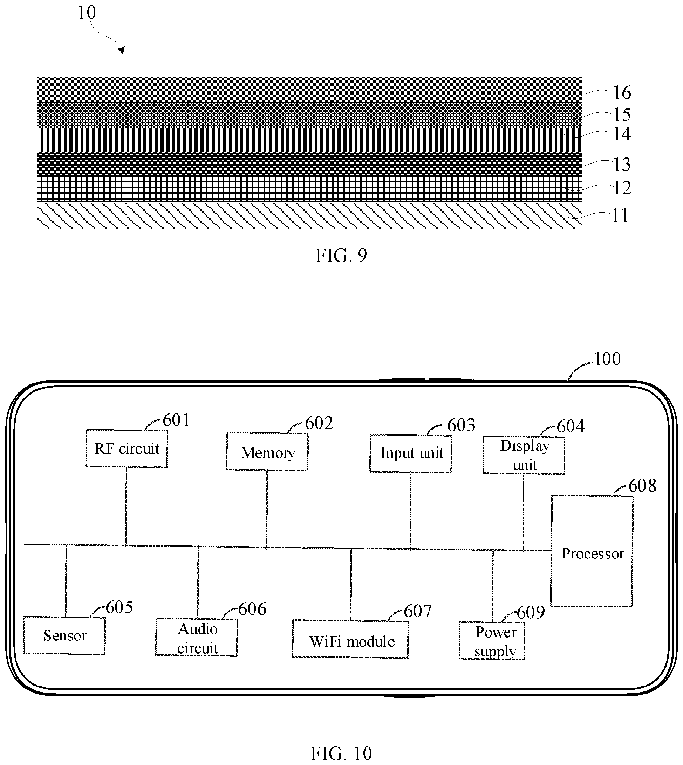

For example, FIG. 9 is a schematic diagram of a layer structure of another flexible display panel 10 according to an embodiment of the present disclosure. As illustrated in FIG. 9, the flexible display panel 10 includes a substrate 11, a thin film transistor (TFT) layer 12, an OLED layer 13, a TFE layer 14, a touch layer 15, and a polarizer 16.

In the present embodiment, the TFT layer 12, the OLED layer 13, the TFE layer 14, the touch layer 15, and the polarizer 16 are sequentially laminated on each other on a side of the substrate 11. That is, the TFT layer 12 is disposed on the side of the substrate 11; the OLED layer 13 is disposed on the TFT layer 12; the TFE layer 14 is disposed on the OLED layer 13; the touch layer 15 is disposed on the TFE layer 14; and the polarizer 16 is disposed on the touch layer 15.

It should be noted that the layer structure of the flexible display panel 10 is not limited to these two structural forms as illustrated above. The flexible display panel 10 may be in other layer structure forms, if the requirement of folding display can be satisfied.

FIG. 10 is a schematic structural diagram of a terminal device 100 according to an embodiment of the present disclosure. As illustrated again in FIG. 10, the terminal device 100 may include a radio frequency (RF) circuit 501, a memory 502 including one or more computer-readable storage media, an input unit 503, a display unit 504, a sensor 505, an audio circuit 506, a wireless fidelity (WIFI) module 507, a processor 508 including one or more processing cores, and a power supply 509, and the like. It can be understood by those skilled in the art that, the structure of the terminal device 100 illustrated in FIG. 10 does not constitute a limitation of the terminal device 100. Instead, the terminal device 100 may include more or fewer components than those illustrated in FIG. 10, or include a combination of components, or have a different arrangement of components.

The RF circuit 501 can be configured to receive and transmit information, or receive and transmit a signal during a process of making a call. In an embodiment, the RF circuit 501 can be configured to transmit, after receiving downlink data from a base station, the downlink data to one or more processors 508 for processing of the downlink data. In addition, the RF circuit 501 can be configured to transmit uplink data to the base station. In general, the RF circuit 501 includes, but not limited to, an antenna, at least one amplifier, a tuner, one or more oscillators, a subscriber identity module (SIM) card, a transceiver, a coupler, a low noise amplifier (LNA), a diplexer, or the like. Furthermore, the RF circuit 501 may be further configured to communicate with other devices via wireless communication and network. The wireless communication may adopt any communication standard or protocol, which includes, but not limited to, global system of mobile communication (GSM), general packet radio service (GPRS), code division multiple access (CDMA), wideband code division multiple access (WCDMA), long term evolution (LTE), e-mail, short messaging service (SMS), or the like.

The memory 502 can be configured to store an application program and data. The application program stored in the memory 502 includes executable codes. The application program may include various functional modules. The processor 508 can execute various functional applications and data processing by running the application program stored in the memory 502. The memory 502 may mainly include a program storage area and a data storage area. The program storage area can be configured to store an operating system, an application program necessary for at least one function (such as a sound playing function, an image playing function, etc.), or the like. The data storage area can be configured to store data produced by use of the terminal device 100 (such as audio data, an address book, etc.), or the like. In addition, the memory 502 may include a high-speed random-access memory, or a non-volatile memory such as at least one disk memory, a flash memory, or another volatile solid-state memory. Accordingly, the memory 502 may further include a memory controller configured to provide an access of the processor 508 and an input unit 503 to the memory 502 by.

The input unit 503 can receive the inputted numerical digit, character information, or user characteristic information (e.g., fingerprints) and to generate a keyboard input, a mouse input, a joystick input, an optical input, or a trackball signal input that is related to a user setup or function control. In a specific embodiment, the input unit 503 may include a touch-sensitive surface and other input devices. The touch-sensitive surface, also referred to as a touch display screen or a touch pad, can sense a touch operation on or near the touch-sensitive surface (e.g., the user's operation on or near the touch-sensitive surface by means of a finger, a stylus, or any other suitable objects or accessories), and it can drive a corresponding connection apparatus based on a predetermined program. Optionally, the touch-sensitive surface may include a touch detection apparatus and a touch controller. The touch detection apparatus is configured to: detect the orientation and position of the user's touch, detect a signal generated by the touch operation, and transmit the signal to the touch controller. The touch controller is configured to: receive touch information from the touch detection apparatus, convert the touch information to a touch point coordinate, transmit the touch point coordinate to the processor 508, and receive and execute instruction transmitted by the processor 508.

The display unit 504 can be configured to display information inputted by the user or provided to the user and various graphical user interfaces of the terminal device 100. The graphical user interfaces may consist of a graph, a text, an icon, a video, and any combination thereof. The display unit 504 may include a display panel. Optionally, the display panel may be configured in a form of a liquid crystal display (LCD), an OLED, or the like.

Further, the touch-sensitive surface may cover the display panel. The touch-sensitive surface can transmit, in response to detecting the touch operation on or near it, the touch operation to the processor 508 to determine a type of a touch event. The processor 508, based on the type of the touch event, provides a corresponding visual output on the display panel.

In FIG. 10, the touch-sensitive surface and the display panel exert the input and output functions as two separate components. However, in some embodiments, the touch-sensitive surface and the display panel may be integrated to exert the input and output functions. It can be appreciated that a display screen 110 may include the input unit 503 and the display unit 504.

The terminal device 100 may further include at least one sensor 505, such as an optical sensor, a motion sensor, and other sensors. In an embodiment, the optical sensor may include an ambient light sensor and a proximity sensor. The ambient light sensor can adjust brightness of the display panel based on an intensity of ambient light. The proximity sensor can turn off the display panel and/or backlight when the terminal device 100 is moved to a position near an ear of the user. A gravitational acceleration sensor, as one type of the motion sensors, can detect acceleration magnitudes in various directions (generally directions of three axes) and measure a magnitude and direction of gravity when the phone is in stationary, which can be applied in an application for identifying a posture of a mobile phone (such as landscape screen and portrait screen switching, related games, magnetometer posture calibration), or which can be used to provide related functions of vibration identification (such as a pedometer, knocking, etc.), or the like. Furthermore, the terminal device 100 may be configured with a gyroscope, a barometer, a hygrometer, a thermometer, an infrared sensor, and other sensors, which is not described in detail herein.

The audio circuit 506 can provide an audio interface between the user and the terminal device 100 via a loudspeaker and a microphone. The audio circuit 506 can convert received audio data to an electrical signal, and transmit the electrical signal to the loudspeaker. The loudspeaker can convert the electrical signal to a sound signal and output the sound signal. In another aspect, the microphone can convert a collected sound signal to an electrical signal. The audio circuit 506 can receive the electrical signal, convert the electrical signal to audio data, output the audio data to the processor 508 for a processing. The processed audio data is transmitted to another terminal device 100 via the RF circuit 501, or the audio data is outputted to the memory 502 for a further processing. The audio circuit 506 may further include an earphone jack configured to provide communication between a peripheral earphone and the terminal device 100.

WIFI belongs to short-distance wireless communication technologies. The user, by means of the WIFI module 507 of the terminal device 100, can receive or send an e-mail, browse webpages, access streaming media, or the like. The WIFI module 507 provides the user with a wireless broadband Internet access. It can be understood that the WIFI module 507 illustrated in FIG. 10 is not an essential component of the terminal device 100. The WIFI module 507 may be omitted entirely as needed without changing a scope of the essence of the present disclosure.

The processor 508, as a control center of the terminal device 100, can connect respective parts of the terminal device 100 to each other by using various interfaces and wires. By running or executing the application program stored in the memory 502, and by calling data stored in the memory 502, the processor 508 can implement various functions of the terminal device 100 and process the data, to monitor the terminal device 100. In some embodiments, the processor 508 may include one or more processing cores. As an example, the processor 508 may be integrated with an application processor or a modem processor. The application processor can be mainly configured to process an operating system, a user interface, an application program, or the like. The modem processor can be mainly configured to process wireless communication. It can be understood that, the above modem controller may not be integrated in the processor 508.

The terminal device 100 may further include the power supply 509 configured to supply power to the respective components of the terminal device. Preferably, the power supply 509 may be logically connected to the processor 508 via a power management system, thereby managing charging, discharging, and power consumption via the power management system. The power supply 509 may further include one or more direct-current power supplies or alternating-current power supplies, rechargeable systems, power supply failure detection circuits, power converters or inverters, power state indicators, or the like.

Although not illustrated in FIG. 10, the terminal device 100 may further include a Bluetooth module or the like, which is not described in detail herein. In a specific implementation, the respective modules may be embodied as one independent entity, or they may be combined with one another arbitrarily as a same or several entities. The specific implementations of the respective modules described above may refer to the previous method embodiments, which is not described in detail herein.

The technical features of the embodiments described above can be combined arbitrarily. For the purpose of concise description, not every possible combination of the individual technical features in the above embodiments is described herein. However, any possible combination of the technical features in the above embodiments shall be construed as falling within the scope of this specification, unless they contradict to each other.

The scope of the present disclosure should not be construed as being limited to the several implementations of the present disclosure described in the above embodiments. It can be understood that those skilled in the art can make various modifications and improvements without departing from the concept of the present disclosure. These modifications and improvements shall be encompassed by the protection scope of the present disclosure as defined by the claims as attached.

## Claims

1. A foldable display screen, comprising:
a flexible display panel having a display surface; and
an axis-variable foldable assembly arranged on a side of the flexible display panel facing away from the display surface, wherein:
the axis-variable foldable assembly comprises a shaft body, and magnetic coils arranged at two ends of the shaft body;
the shaft body comprises a flexible outer layer connected to the flexible display panel, and a plurality of magnetic beads wrapped by the flexible outer layer;
the plurality of magnetic beads wrapped by the flexible outer layer are movable relative to each other in a folding motion of the axis-variable foldable assembly; and
upon a change in a current supplied to the magnetic coils, the magnetic coils are capable of generating variable magnetic fields to adjust an arrangement of the plurality of magnetic beads wrapped by the flexible outer layer.

2. The foldable display screen according to claim 1, wherein:
the flexible display panel comprises a first panel, a second panel, and a flexible connecting portion bendably connected between the first panel and the second panel;
the axis-variable foldable assembly is connected to a side of the flexible connecting portion facing away from the display surface, and the axis-variable foldable assembly has a folding axis; and
in a folding motion of the flexible display panel, a portion of the axis-variable foldable assembly corresponding to the folding axis is capable of abutting against the flexible connecting portion to allow a folding motion of the flexible connecting portion around the folding axis.

3. The foldable display screen according to claim 2, wherein in the folding motion of the flexible display panel, the current supplied to the magnetic coils is changeable with folding of the flexible display panel to adjust a position of the folding axis.

4. The foldable display screen according to claim 3, having a motion sensor disposed thereon, the motion sensor being configured to detect a folding state of the foldable display screen and generate a detection signal, wherein the magnetic coils are electrically connected to a control module, the control module being configured to adjust the current supplied to the magnetic coils based on the detection signal.

5. The foldable display screen according to claim 4, wherein:
upon a change in a direction of the current supplied to the magnetic coils, the magnetic coils are capable of generating the variable magnetic field to adjust the arrangement of the plurality of magnetic beads wrapped by the flexible outer layer; and/or
upon a change in a magnitude of the current supplied to the magnetic coils, the magnetic coils are capable of generating the variable magnetic field to adjust the arrangement of the plurality of magnetic beads wrapped by the flexible outer layer.

6. The foldable display screen according to claim 3, wherein the flexible outer layer is made of one or more of polyether sulfone, polyacrylate, polyetherimide, polyethylene naphthalate, polyethylene terephthalate, polyphenylene sulfide, polyallylate, polyimide, polycarbonate, or cellulose acetate propionate.

7. The foldable display screen according to claim 3, wherein at least two sets of magnetic coils are provided, each of the at least two sets of magnetic coils comprising two magnetic coils correspondingly and respectively disposed at the two ends of the shaft body, and the magnetic coils at each of the two ends of the shaft body being evenly arranged.

8. The foldable display screen according to claim 3, wherein:
at least two sets of magnetic coils are provided, each of the at least two sets of magnetic coils comprising two magnetic coils correspondingly and respectively disposed at the two ends of the shaft body; and
magnetic fields generated by the at least two sets of magnetic coils overlap each other.

9. The foldable display screen according to claim 8, wherein the magnetic coils located at a same end of the shaft body are arranged in a wavy pattern.

10. The foldable display screen according to claim 3, wherein an inner space defined by the flexible outer layer is filled with a lubricant to fill in gaps between the plurality of magnetic beads.

11. A foldable display screen, comprising:
a flexible display panel having a display surface; and
an axis-variable foldable assembly arranged on a side of the flexible display panel facing away from the display surface, the axis-variable foldable assembly having a folding axis, wherein:
the flexible display panel is capable of performing a folding motion around the folding axis; and
in the folding motion of the flexible display panel, a position of the folding axis in the axis-variable foldable assembly varies.

12. The foldable display screen according to claim 11, wherein:
the flexible display panel comprises a first panel, a second panel, and a flexible connecting portion bendably connected between the first panel and the second panel; and
the axis-variable foldable assembly is connected to a side of the flexible connecting portion facing away from the display surface.

13. The foldable display screen according to claim 11 or 12, wherein:
the axis-variable foldable assembly comprises a shaft body, and magnetic coils arranged at two ends of the shaft body;
the shaft body comprises a flexible outer layer connected to the flexible display panel, and a plurality of magnetic beads wrapped by the flexible outer layer;
in a folding motion of the axis-variable foldable assembly, the plurality of magnetic beads wrapped by the flexible outer layer are movable relative to each other; and
upon a change in a current supplied to the magnetic coils, the magnetic coils are capable of generating variable magnetic fields to adjust an arrangement of the plurality of magnetic beads wrapped by the flexible outer layer.

14. The foldable display screen according to claim 13, wherein in the folding motion of the flexible display panel, the current supplied to the magnetic coils is changeable with folding of the flexible display panel to adjust a position of the folding axis.

15. The foldable display screen according to claim 13, having a motion sensor disposed thereon, the motion sensor being configured to detect a folding state of the foldable display screen and generate a detection signal, wherein the magnetic coils are electrically connected to a control module, the control module being configured to adjust the current supplied to the magnetic coils based on the detection signal.

16. The foldable display screen according to claim 15, wherein:
upon a change in a direction of the current supplied to the magnetic coils, the magnetic coils are capable of generating the variable magnetic field to adjust the arrangement of the plurality of magnetic beads wrapped by the flexible outer layer; and/or
upon a change in a magnitude of the current supplied to the magnetic coils, the magnetic coils are capable of generating the variable magnetic field to adjust the arrangement of the plurality of magnetic beads wrapped by the flexible outer layer.

17. The foldable display screen according to claim 13, wherein at least two sets of magnetic coils are correspondingly provided at the two ends of the shaft body, and magnetic coils of the at least two sets of magnetic coils are evenly arranged at the two ends of the shaft body.

18. The foldable display screen according to claim 13, wherein:
at least two sets of magnetic coils are correspondingly provided at the two ends of the shaft body; and
magnetic fields generated by the at least two sets of magnetic coils overlap each other.

19. The foldable display screen according to claim 18, wherein the magnetic coils located at a same end of the shaft body are arranged in a wavy pattern.

20. The foldable display screen according to claim 13, wherein an inner space defined by the flexible outer layer is filled with a lubricant to fill in gaps between the plurality of magnetic beads.

21. A terminal device, comprising the foldable display screen according to any one of claims 1 to 20.
